(19) Europäisches Patentamt
European Patent Office
Office européen des brevets

(11) EP 3 437 761 A1

(12) EUROPÄISCHE PATENTANMELDUNG

(43) Veröffentlichungstag:
06.02.2019 Patentblatt 2019/06

(51) Int Cl.:
B22F 3/105 (2006.01)      B22F 7/06 (2006.01)
B22F 3/00 (2006.01)       B22F 5/00 (2006.01)

(21) Anmeldenummer: 17184200.8

(22) Anmeldetag: 01.08.2017

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA MD

(71) Anmelder: HILTI Aktiengesellschaft
9494 Schaan (LI)

(72) Erfinder:
• Mueller, Matthias
  9470 Buchs (CH)
• Schaefer, Heiko
  9000 St Gallen (CH)
• Sonderegger, Marcel
  9436 Balgach (CH)

(74) Vertreter: Hilti Aktiengesellschaft
Corporate Intellectual Property
Feldkircherstrasse 100
Postfach 333
9494 Schaan (LI)

(54) **VERFAHREN ZUR HERSTELLUNG EINES BEARBEITUNGSSEGMENTES FÜR EIN ABRASIVES BEARBEITUNGSWERKZEUG**

(57) Verfahren zur Herstellung eines Bearbeitungssegmentes, bei dem ein Grünling (51) aus einer Bearbeitungszone (54) aufgebaut wird, wobei die Bearbeitungszone (54) aus einem ersten metallischen Pulverwerkstoff (56) und Hartstoffpartikeln (58) hergestellt wird, der Grünling (51) unter Druckeinwirkung mit einem Pressdruck zu einem Pressling verdichtet wird und der Pressling unter Temperatureinwirkung bei einer Sintertemperatur zum fertigen Bearbeitungssegment gesintert wird, wobei die Bearbeitungszone (54) durch schichtweises Auftragen von Werkstoffschichten des ersten metallischen Pulverwerkstoffes (56) und Partikellagen der Hartstoffpartikel (58) hergestellt wird, wobei die Hartstoffpartikel (58) einer Partikellage in die zuvor aufgetragene Werkstoffschicht des ersten metallischen Pulverwerkstoffes (56) platziert werden.

FIG. 4A

## Beschreibung

### Technisches Gebiet

Die vorliegende Erfindung betrifft ein Verfahren zur Herstellung eines Bearbeitungssegmentes für ein abrasives Bearbeitungswerkzeug gemäß dem Oberbegriff des Anspruchs 1.

### Stand der Technik

Abrasive Bearbeitungswerkzeuge, wie Bohrkronen, Sägeblätter und Schleifscheiben, umfassen Bearbeitungssegmente, die an einem rohr- oder scheibenförmigen Grundkörper befestigt werden, wobei die Bearbeitungssegmente beispielsweise durch Schweißen, Löten oder Kleben mit dem Grundkörper verbunden werden. Abhängig vom Bearbeitungsverfahren des abrasiven Bearbeitungswerkzeugs werden die Bearbeitungssegmente als Bohrsegmente, Sägesegmente oder Schleifsegmente bezeichnet und unter dem Begriff "Bearbeitungssegmente" zusammengefasst.

Bearbeitungssegmente weisen eine Bearbeitungszone auf, die aus einem metallischen Pulverwerkstoff und Hartstoffpartikeln aufgebaut ist. Die Bearbeitung eines Untergrundes erfolgt mittels der Hartstoffpartikel, die im metallischen Pulverwerkstoff verteilt sind. Bearbeitungssegmente, die mit dem rohr- oder scheibenförmigen Grundkörper des abrasiven Bearbeitungswerkzeugs verschweißt werden sollen, sind aus der Bearbeitungszone und einer Neutralzone aufgebaut, wobei die Neutralzone aus einem metallischen Pulverwerkstoff aufgebaut wird, der vom metallischen Pulverwerkstoff der Bearbeitungszone verschieden ist; außerdem ist die Neutralzone in der Regel frei von Hartstoffpartikeln. Die Neutralzone ist erforderlich, da die metallischen Pulverwerkstoffe, die üblicherweise für den Aufbau der Bearbeitungszone verwendet werden, in der Regel nur schlecht schweißbar sind.

EP 0 925 378 B1 beschreibt ein bekanntes Verfahren zur Herstellung von Bearbeitungssegmenten für abrasive Bearbeitungswerkzeuge. Die Bearbeitungssegmente werden aus einem metallischen Pulverwerkstoff und Hartstoffpartikeln aufgebaut, wobei der metallische Pulverwerkstoff und die Hartstoffpartikel gemischt werden und die Hartstoffpartikel im metallischen Pulverwerkstoff statistisch verteilt angeordnet sind. Die Mischung aus metallischem Pulverwerkstoff und statistisch verteilten Hartstoffpartikeln wird in eine Werkzeugform gefüllt und unter Druckeinwirkung zu einem Pressling verdichtet, wobei der Pressling bis in die Endgeometrie des Bearbeitungssegmentes verdichtet wird. Der Pressling wird anschließend durch druckloses Sintern zum fertigen Bearbeitungssegment gesintert. Der Pressling wird auch als verdichteter Grünling bezeichnet, was bedeutet, dass der Pressling noch nicht gesintert ist. Der Pressling wird durch Kaltpressen mit Pressdrücken zwischen 320 und 1.500 MPa, insbesondere mit Pressdrücken zwischen 400 und 850 MPa, hergestellt und im folgenden Sinterprozess durch druckloses Sintern mit Temperaturen zwischen 900 und 1.300 °C, insbesondere mit Temperaturen zwischen 900 °C und 1.050 °C, gesintert. Die nach EP 0 925 378 B1 hergestellten Bearbeitungssegmente weisen eine Porosität zwischen 10 und 25 Volumen-% auf, wobei eine Porosität von 10 Volumen-% einer mittleren Dichte von 90 % der theoretischen Dichte entspricht und eine Porosität von 25 Volumen-% einer mittleren Dichte von 75 % der theoretischen Dichte entspricht.

Bohr- und Sägeversuche mit Bearbeitungssgmenten, die mittels des in EP 0 925 378 B1 beschriebenen Verfahrens hergestellt wurden, haben gezeigt, dass die Lebensdauer der Bearbeitungssegmente gegenüber Bearbeitungssegmenten mit einer Porosität unter 10 Volumen-% reduziert ist. Die im Bearbeitungssegment verteilten Poren bieten keine ausreichenden Haltekräfte für die Hartstoffpartikel im gesinterten metallischen Pulverwerkstoff, so dass die Hartstoffpartikel während der Bearbeitung gelockert werden, was zu vorzeitigem Ausfall der Hartstoffpartikel führt und die Lebensdauer der Bearbeitungssegmente reduziert.

Die Lebensdauer der Bearbeitungssegmente kann durch eine Reduzierung der Porosität erhöht werden. Das aus EP 0 925 378 B1 bekannte Verfahren zur Herstellung von Bearbeitungssegmenten ist nicht geeignet, um wirtschaftlich Bearbeitungssegmente mit einer Porosität unter 10 Volumen-% herzustellen. Das bekannte Verfahren weist den Nachteil auf, dass die Hartstoffpartikel statistisch verteilt im metallischen Pulverwerkstoff angeordnet sind und an der Oberfläche des verdichteten Grünlings vorstehen können. Hartstoffpartikel, die an der Oberfläche des verdichteten Grünlings vorstehen, können die Werkzeugform beim Verdichten des Grünlings in die Endgeometrie beschädigen. Bei Pressdrücken über 850 MPa weisen die Werkzeugformen einen erhöhten Verschleiß auf, der die Werkzeugkosten bei der Herstellung erhöht und die Herstellung der Bearbeitungssegmente unwirtschaftlich machen kann. Um den Verschleiß der Werkzeugformen zu reduzieren, müssen die Pressdrücke reduziert werden, wobei die Bearbeitungssegmente durch eine Reduzierung der Pressdrücke unter 850 MPa geringere mittlere Dichten und damit eine höhere Porosität aufweisen.

### Darstellung der Erfindung

Die Aufgabe der vorliegenden Erfindung besteht darin, ein Verfahren zur Herstellung eines Bearbeitungssegmentes zu entwickeln, bei dem die Porosität des fertigen Bearbeitungssegmentes unter 10 Volumen-% liegt, wobei die Bearbeitungssegmente möglichst kostengünstig und werkzeugschonend hergestellt werden.

Diese Aufgabe wird bei dem eingangs genannten Verfahren erfindungsgemäß durch die Merkmale des unabhängigen Anspruchs 1 gelöst. Vorteilhafte Weiterbildungen sind in den abhängigen Ansprüchen angegeben.

Das Verfahren zur Herstellung eines Bearbeitungssegmentes ist erfindungsgemäß dadurch gekennzeichnet, dass die Bearbeitungszone durch schichtweises Auftragen von Werkstoffschichten des ersten metallischen Pulverwerkstoffes und Partikellagen der Hartstoffpartikel hergestellt wird, wobei die Hartstoffpartikel einer Partikellage in die zuvor aufgetragene Werkstoffschicht des ersten metallischen Pulverwerkstoffes platziert werden. Durch das Platzieren der Hartstoffpartikel in die Werkstoffschichten des ersten metallischen Pulverwerkstoffes können die Hartstoffpartikel ausschließlich im Inneren des Grünlings angeordnet werden, so dass beim Verdichten des Grünlings in die Endgeometrie des Bearbeitungssegmentes keine Hartstoffpartikel mit der Werkzeugform in Kontakt kommen. Das erfindungsgemäße Verfahren hat den Vorteil, dass beim Verdichten der Grünlinge unter Druckeinwirkung kein Verschleiß der Werkzeugformen durch vorstehende Hartstoffpartikel auftritt. Da die Hartstoffpartikel ausschließlich im Inneren des Grünlings angeordnet sind, können beim Verdichten hohe Pressdrücke eingesetzt werden, die die Grünlinge in die Endgeometrie verdichten. Hohe Pressdrücke ermöglichen die Herstellung von Bearbeitungssegmenten mit einer mittleren Dichte über 90 % der theoretischen Dichte und einer Porosität unter 10 Volumen-%.

Die Herstellung der Bearbeitungssegmente erfolgt beim erfindungsgemäßen Verfahren in drei Abschnitten: Im ersten Abschnitt werden Grünlinge schichtweise aufgebaut, im zweiten Abschnitt werden die Grünlinge unter Druckeinwirkung im Wesentlichen in die Endgeometrie der Bearbeitungssegmente verdichtet (Presslinge) und im dritten Abschnitt werden die Presslinge unter Temperatureinwirkung zu fertigen Bearbeitungssegmenten gesintert. Die schichtweise aufgebauten Grünlinge werden unter Druckeinwirkung mit einem Pressdruck verdichtet, bis die Presslinge im Wesentlichen die Endgeometrie der fertigen Bearbeitungssegmente aufweisen. Als Verfahren, die eine Druckeinwirkung auf die Grünlinge erzielen, eignen sich beispielsweise Kaltpressverfahren oder Warmpressverfahren. Bei Kaltpressverfahren werden die Grünlinge ausschließlich einer Druckeinwirkung ausgesetzt, während die Grünlinge bei Warmpressverfahren neben der Druckeinwirkung einer Temperatureinwirkung bis zu Temperaturen von 200 °C ausgesetzt werden. Die Presslinge werden unter Temperatureinwirkung bei einer Sintertemperatur zu fertigen Bearbeitungssegmenten gesintert. Beim Sintern wird die Festigkeit der Bearbeitungssegmente durch Diffusionsvorgänge im Oberflächenbereich der Pulverpartikel und durch Bildung von sogenannten Sinterhälsen gesteigert und ein verwendetes Presshilfsmittel wird ausgebrannt. Das Sintern erfolgt drucklos und formfrei, wobei drucklos bedeutet, dass der Sinterprozess ohne Druckeinwirkung erfolgt, und formfrei bedeutet, dass der Sinterprozess ohne Werkzeugform erfolgt.

Das erfindungsgemäße Verfahren zur Herstellung eines Bearbeitungssegmentes ist für metallische Pulverwerkstoffe und Hartstoffpartikel geeignet. Unter dem Begriff "metallische Pulverwerkstoffe" werden sämtliche metallischen Werkstoffe zusammengefasst, die im Ausgangszustand fest sind und aus losen, d.h. nicht verbundenen, Pulverkörnern bestehen. Metallische Pulverwerkstoffe können aus einem Werkstoffpulver bestehen oder als Gemisch aus verschiedenen Werkstoffpulvern zusammengesetzt sein. Metallische Pulverwerkstoffe für die Herstellung der Bearbeitungssegmente im Rahmen des erfindungsgemäßen Verfahrens bestehen üblicherweise aus einem Basispulver, dem Presshilfsmittel und Additive beigemischt werden, wobei die Additive dazu dienen, die Eigenschaften des ersten metallischen Pulverwerkstoffes im Hinblick auf die Festigkeit und die Verschleißrate der Bearbeitungssegmente zu optimieren. Das Basispulver kann aus einem Grundwerkstoff bestehen oder aus mehreren Grundwerkstoffen zusammengesetzt sein. Unter dem Begriff "Hartstoffpartikel" werden sämtliche Schneidmittel für Bearbeitungssegmente zusammengefasst. Dazu gehören vor allem einzelne Hartstoffpartikel, Verbundteile aus mehreren Hartstoffpartikeln und beschichtete oder gekapselte Hartstoffpartikel. Hartstoffe zeichnen sich durch eine besondere Härte aus. Dabei lassen sich Hartstoffe zum einen in natürliche und synthetische Hartstoffe und zum anderen in metallische und nichtmetallische Hartstoffe unterteilen. Zu den natürlichen Hartstoffen gehören u.a. natürliche Diamanten, Korund und andere harte Mineralien und zu den synthetischen Hartstoffen gehören u.a. synthetische Diamanten, hochschmelzende Karbide, Boride, Nitride und Silizide. Zu den metallischen Hartstoffen gehören u.a. die hochschmelzenden Karbide, Boride, Nitride und Silizide der Übergangsmetalle der vierten bis sechsten Gruppe des Periodensystems und zu den nichtmetallischen Hartstoffen gehören u.a. Diamant, Korund, andere harte Mineralien, Siliziumkarbid und Borkarbid.

Bevorzugt wird die Bearbeitungszone aus N Werkstoffschichten des ersten metallischen Pulverwerkstoffes und M Partikellagen der Hartstoffpartikel hergestellt, wobei die Anzahl N der Werkstoffschichten grösser oder gleich der Anzahl M der Partikellagen ist. Die Hartstoffpartikel sind in M Partikellagen angeordnet, wobei jede Partikellage ein definiertes Setzmuster für die Hartstoffpartikel aufweist. Die Setzmuster der Partikellagen und die Anzahl der Hartstoffpartikel in den Partikellagen werden üblicherweise an den Anwendungsbereich der Bearbeitungssegmente angepasst. Über die Anzahl N und die Dicke der Werkstoffschichten des ersten metallischen Pulverwerkstoffes wird der Abstand zwischen den Partikellagen der Hartstoffpartikel eingestellt. Bei der Bearbeitung von verschiedenen Untergründen kann es hilfreich sein, den Abstand zwischen den Partikellagen der Hartstoffpartikel an den zu bearbeitenden Untergrund anzupassen.

Besonders bevorzugt werden die Hartstoffpartikel einer Partikellage mit einem Seitenabstand grösser als 50 µm in die zuvor aufgetragene Werkstoffschicht des ersten metallischen Pulverwerkstoffes platziert.

Durch das Platzieren der Hartstoffpartikel einer Partikellage mit einem Seitenabstand in die Werkstoffschichten des ersten metallischen Pulverwerkstoffes wird sichergestellt, dass die Hartstoffpartikel ausschließlich im Inneren des Grünlings angeordnet sind, so dass beim Verdichten des Grünlings in die Endgeometrie des Bearbeitungssegmentes keine Hartstoffpartikel mit der Werkzeugform in Kontakt kommen. Da die Hartstoffpartikel ausschließlich im Inneren des Grünlings angeordnet sind, können beim Verdichten hohe Pressdrücke eingesetzt werden, die den Grünling in die Endgeometrie mit einer mittleren Dichte über 90 % der theoretischen Dichte und einer Porosität unter 10 Volumen-% verdichten. Die Herstellung der Bearbeitungssegmente erfolgt auch bei Pressdrücken über 850 MPa werkzeugschonend.

Besonders bevorzugt wird nach dem Platzieren der M-ten Partikellage der Hartstoffpartikel eine weitere Werkstoffschicht des ersten metallischen Pulverwerkstoffes als Decklage aufgetragen. Durch das Auftragen einer weiteren Werkstoffschicht des ersten metallischen Pulverwerkstoffes als Decklage wird sichergestellt, dass an der Oberseite des Grünlings keine Hartstoffpartikel vorstehen, die die Werkzeugform beim Verdichten des Grünlings unter Druckeinwirkung beschädigen könnten. Die Herstellung der Bearbeitungssegmente erfolgt auch bei Pressdrücken über 850 MPa werkzeugschonend.

In einer bevorzugten Ausführung wird der Grünling unter Druckeinwirkung mit einem Pressdruck zwischen 850 MPa und 1.250 MPa zum Pressling verdichtet. Die Eigenschaften des ersten metallischen Pulverwerkstoffes sind so gewählt, dass der Grünling bei einem Druck zwischen 850 MPa und 1.250 MPa auf eine mittlere Dichte $\delta$ von mindestens 90 % der theoretischen Dichte $\delta_{th}$ des ersten metallischen Pulverwerkstoffes komprimierbar ist. Bei einer mittleren Dichte $\delta$ von mindestens 90 % der theoretischen Dichte $\delta_{th}$ liegt die Porosität des Bearbeitungssegmentes unter 10 Volumen-%.

In einer bevorzugten Ausführung wird der Pressling unter Temperatureinwirkung bei einer Sintertemperatur zwischen 900 °C und 1.050 °C zum fertigen Bearbeitungssegment gesintert. Die Eigenschaften des ersten metallischen Pulverwerkstoffes sind so gewählt, dass der Pressling bei einer Sintertemperatur zwischen 900 °C und 1.050 °C gesintert werden kann. Der erste metallische Pulverwerkstoff ist aus einem Basispulver, einem Presshilfsmittel und Additiven zusammengesetzt, wobei die Additive dazu dienen, die Eigenschaften des ersten metallischen Pulverwerkstoffes im Hinblick auf die Festigkeit und Verschleißrate der Bearbeitungssegmente zu optimieren. Dabei wird insbesondere ein Metallsulfid eingesetzt, das die Verschleißrate anpassen kann. Die Sintertemperatur wird so gewählt, dass das eingesetzte Metallsulfid bei der gewählten Sintertemperatur in der flüssigen Phase vorliegt, d.h. die Sintertemperatur liegt oberhalb der Schmelztemperatur des eingesetzten Metallsulfids.

Bearbeitungssegmente, die mittels des erfindungsgemäßen Verfahrens hergestellt werden, sind aus dem ersten metallischen Pulverwerkstoff und Hartstoffpartikeln aufgebaut. Die Bearbeitung erfolgt mittels der Hartstoffpartikel, deren Verteilung im Bearbeitungssegment an den zu bearbeitenden Untergrund angepasst ist. Um die Verteilung der Hartstoffpartikel zu gewährleisten, müssen die Hartstoffpartikel hinreichend genau in die Werkstoffschichten platziert werden, die Positionen der platzierten Hartstoffpartikel müssen während der Herstellung der Bearbeitungssegmente eingehalten werden und die Hartstoffpartikel müssen während der Bearbeitung mit den Bearbeitungssegmenten einerseits im gesinterten ersten metallischen Pulverwerkstoff fixiert sein und andererseits für die Bearbeitung des Untergrundes freigegeben werden. Aus diesen Anforderungen, die sich durch die Verwendung von Hartstoffpartikeln als Schneidmittel ergeben, lassen sich Werte für die Festigkeit des fertigen Bearbeitungssegmentes und die Verschleißrate des gesinterten ersten metallischen Pulverwerkstoffes ableiten.

Bevorzugt wird als erster metallischer Pulverwerkstoff ein metallischer Pulverwerkstoff eingesetzt, der zumindest leicht fließend ist. Besonders bevorzugt wird als erster metallischer Pulverwerkstoff ein metallischer Pulverwerkstoff eingesetzt, der frei fließend ist. Ein zumindest leicht fließender erster metallischer Pulverwerkstoff eignet sich für den schichtweisen Aufbau des Grünlings im Rahmen des erfindungsgemäßen Verfahrens. Je höher die Fließfähigkeit des ersten metallischen Pulverwerkstoffes ist, umso besser ist der erste metallische Pulverwerkstoff für den schichtweisen Aufbau des Grünlings aus mehreren Werkstoffschichten und Partikellagen im Rahmen des erfindungsgemäßen Verfahrens zur Herstellung eines Bearbeitungssegmentes geeignet.

Die Fließfähigkeit von metallischen Pulverwerkstoffen wird nach der Norm ISO 4490 mit Hilfe eines kalibrierten Prüftrichters, der als Hall Flowmeter bezeichnet wird, bestimmt. Ein metallischer Pulverwerkstoff wird als leicht fließend bezeichnet, wenn eine Menge des metallischen Pulverwerkstoffes von 50 g ein Hall Flowmeter mit einer Austrittsöffnung von 5,0 mm ohne äußeren Impuls passiert. Ein metallischer Pulverwerkstoff wird als frei fließend bezeichnet, wenn eine Menge des metallischen Pulverwerkstoffes von 50 g ein Hall Flowmeter mit einer Austrittsöffnung von 2,5 mm ohne äußeren Impuls passiert.

Bevorzugt wird als erster metallischer Pulverwerkstoff ein metallischer Pulverwerkstoff eingesetzt, der eine maximale Korngröße von 200 $\mu$m auf. Metallische Pulverwerkstoffe mit einer maximalen Korngröße von 200 $\mu$m ermöglichen eine genaue Platzierung der Hartstoffpartikel im ersten metallischen Pulverwerkstoff der zuvor aufgetragenen Werkstoffschicht. Da die Abweichungen, mit denen die Hartstoffpartikel in den Werkstoffschichten platziert werden können, in der Größenordnung der Korngröße liegen, kann mit dem verwendeten ersten metallischen Pulverwerkstoff die geforderte Genauigkeit beim Platzieren der Hartstoffpartikel erzielt werden.

Bevorzugt wird als erster metallischer Pulverwerkstoff ein metallischer Pulverwerkstoff eingesetzt, der bei einem Maximaldruck von 1.250 MPa auf eine mittlere Dichte $\delta$ grösser als 90 % der theoretischen Dichte $\delta_{th}$ komprimierbar ist. Die theoretische Dichte $\delta_{th}$ des ersten metallischen Pulverwerkstoffes wird aus den spezifischen Gewichten pi und den Gewichtsanteilen wi der n Komponenten (Basispulver und Additive) gemäß der Formel $\delta_{th} = 100 / \sum_{i=1}^{n}(wi/\rho i)$ berechnet. Die Porosität $\phi$ der Bearbeitungssegmente lässt sich aus der mittleren Dichte $\delta$ und der theoretischen Dichte $\delta_{th}$ gemäß der Formel $\phi = 1 - \delta/\delta_{th}$ berechnen. Bei mittleren Dichten $\delta$ grösser als 90 % der theoretischen Dichte $\delta_{th}$ liegt die Porosität $\phi$ der Bearbeitungssegmente unter 10 Volumen-%.

Besonders bevorzugt wird als erster metallischer Pulverwerkstoff ein metallischer Pulverwerkstoff eingesetzt, der bei einem Maximaldruck von 1.250 MPa auf eine mittlere Dichte $\delta$ grösser als 93 % der theoretischen Dichte $\delta_{th}$ komprimierbar ist. Bei mittleren Dichten $\delta$ grösser als 93 % der theoretischen Dichte $\delta_{th}$ liegt die Porosität $\phi$ der Bearbeitungssegmente unter 7 Volumen-%. Je kleiner die Porosität der Bearbeitungssegmente ist, umso besser werden die Hartstoffpartikel im gesinterten ersten metallischen Pulverwerkstoff gehalten.

In einer bevorzugten Ausführung wird als erster metallischer Pulverwerkstoff ein metallischer Pulverwerkstoff eingesetzt, der frei fließend ist, der eine maximale Korngröße von 200 $\mu$m aufweist und der bei einem Maximaldruck von 1.250 MPa auf eine mittlere Dichte $\delta$ grösser als 90 % der theoretischen Dichte $\delta_{th}$ komprimierbar ist. Ein erster metallischer Pulverwerkstoff mit den genannten Eigenschaften (Fließfähigkeit, maximale Korngröße und Verpressbarkeit) ermöglicht die Herstellung von Bearbeitungssegmenten, die die Anforderungen hinsichtlich der Festigkeit des fertigen Bearbeitungssegmentes und der Verschleißrate des gesinterten ersten metallischen Pulverwerkstoffes erfüllen. Der schichtweise Aufbau des Grünlings aus Werkstoffschichten erfordert einen zumindest leicht fließenden ersten metallischen Pulverwerkstoff. Die Verwendung von Pulverkörnern mit einer maximalen Korngröße von 200 $\mu$m gewährleistet, dass die Hartstoffpartikel hinreichend genau in die zuvor aufgetragene Werkstoffschicht platziert werden können. Ein erster metallischer Pulverwerkstoff, der mit einem Maximaldruck von 1.250 MPa auf eine mittlere Dichte $\delta$ von mindestens 90 % der theoretischen Dichte $\delta_{th}$ komprimierbar ist, eignet sich die Herstellung von Bearbeitungssegmenten mit einer Porosität kleiner als 10 Volumen-%.

Der im Rahmen des erfindungsgemäßen Verfahrens verwendete erste metallische Pulverwerkstoff unterscheidet sich in den genannten Eigenschaften von metallischen Pulverwerkstoffen, die beim Heißpressen von Grünlingen mit statisch verteilten Hartstoffpartikeln und beim Heißpressen von schichtweise aufgebauten Grünlingen verwendet werden. Für schichtweise aufgebaute Grünlinge wird ein zumindest leicht fließender metallischer Pulverwerkstoff benötigt. Um die Fließfähigkeit von metallischen Pulverwerkstoffen zu erhöhen, werden metallische Pulverwerkstoffe durch Trocken- oder Nass-Granulieren vorbehandelt. Durch Trocken- oder Nass-Granulieren vorbehandelte metallische Pulverwerkstoffe haben in der Regel den Nachteil, dass diese metallischen Pulverwerkstoffe nur mit Pressdrücken grösser als 1.250 MPa auf eine mittlere Dichte $\delta$ von mindestens 90 % der theoretischen Dichte $\delta_{th}$ komprimiert werden können.

In einer bevorzugten Ausführungsform wird als erster metallischer Pulverwerkstoff ein metallischer Pulverwerkstoff eingesetzt, der mindestens 80 Masse-% eines elementaren oder niedriglegierten Eisenpulvers enthält. Ein Pulver wird als niedriglegiertes Pulver bezeichnet, wenn die Legierungsbestandteile unter 5 Masse-% betragen. Das erfindungsgemäße Verfahren ermöglicht die Herstellung von Bearbeitungssegmenten aus kostengünstigen metallischen Pulverwerkstoffen, die keine aufwändige Vorbehandlung, beispielsweise durch Trocken- oder Nass-Granulieren, benötigen und dennoch die genannten Anforderungen für die Herstellung von Bearbeitungssegmenten erfüllen. Als Basispulver für den ersten metallischen Pulverwerkstoff eignet sich beispielsweise das vorlegierte Eisenpulver Astaloy Mo der Firma Höganäs, das mit 1,5 % Molybdän vorlegiert ist. Das Eisenpulver Astaloy Mo ist frei fließend, weist eine maximale Korngröße von 200 $\mu$m auf und ist mit einem Maximaldruck von 1.250 MPa auf eine mittlere Dichte $\delta$ von mindestens 93 % der theoretischen Dichte $\delta_{th}$ komprimierbar.

Besonders bevorzugt wird als erster metallischer Pulverwerkstoff ein metallischer Pulverwerkstoff eingesetzt, der maximal 10 Masse-% eines Metallsulfids enthält. Die Festigkeit und die Verschleißrate der Bearbeitungssegmente kann durch den Zusatz eines Metallsulfids angepasst werden. Metallsulfide, wie Molybdän-Sulfid, Bismut-Sulfid, etc., sorgen für eine Auflockerung des ersten metallischen Pulverwerkstoffes und passen die Verschleißrate der Bearbeitungssegmente an.

Besonders bevorzugt wird ein Metallsulfid eingesetzt, dessen Schmelztemperatur unterhalb der Sintertemperatur liegt. Die Sintertemperatur, bei der der Pressling im Rahmen des erfindungsgemäßen Verfahrens zum fertigen Bearbeitungssegment gesintert wird, liegt insbesondere zwischen 900 °C und 1.050 °C. Da die Schmelztemperatur des Metallsulfids unterhalb der Sintertemperatur liegt, liegt das Metallsulfid beim Sintern in der flüssigen Phase vor. Durch die flüssige Phase des Metallsulfids kann sich das Metallsulfid homogener in der Bearbeitungszone des Bearbeitungssegmentes verteilen.

In einer bevorzugten Weiterentwicklung des Verfahrens wird der Grünling aus der Bearbeitungszone und einer Neutralzone aufgebaut, wobei die Neutralzone aus einem zweiten metallischen Pulverwerkstoff hergestellt wird und der zweite metallische Pulverwerkstoff vom ersten metallischen Pulverwerkstoff verschieden ist. Bearbeitungssegmente, die mit dem rohr- oder scheibenförmigen Grundkörper des abrasiven Bearbeitungswerkzeuges verschweißt werden sollen, bestehen aus einer Bearbeitungszone und einer Neutralzone, wobei die Bearbeitungszone aus einem ersten metallischen Pulverwerkstoff und die Neutralzone aus einem zweiten metallischen Pulverwerkstoff aufgebaut sind. Der erste metallische Pulverwerkstoff wird im Hinblick auf die Bearbeitungseigenschaften der Bearbeitungssegmente ausgewählt und der zweite metallische Pulverwerkstoff wird im Hinblick auf die Schweißbarkeit ausgewählt.

Bevorzugt wird als zweiter metallischer Pulverwerkstoff ein metallischer Pulverwerkstoff eingesetzt, der zumindest leicht fließend ist. Besonders bevorzugt wird als zweiter metallischer Pulverwerkstoff ein metallischer Pulverwerkstoff eingesetzt, der frei fließend ist. Ein zumindest leicht fließender zweiter metallischer Pulverwerkstoff eignet sich für den schichtweisen Aufbau der Neutralzone im Rahmen des erfindungsgemäßen Verfahrens. Je höher die Fließfähigkeit des zweiten metallischen Pulverwerkstoffes ist, umso besser ist der zweite metallische Pulverwerkstoff für den schichtweisen Aufbau der Neutralzone im Rahmen des erfindungsgemäßen Verfahrens zur Herstellung eines Bearbeitungssegmentes geeignet.

Bevorzugt wird als zweiter metallischer Pulverwerkstoff ein metallischer Pulverwerkstoff eingesetzt, der bei einem Maximaldruck von 1.250 MPa auf eine mittlere Dichte $\delta$ grösser als 90 % der theoretischen Dichte $\delta_{th}$ komprimierbar ist. Bei mittleren Dichten $\delta$ grösser als 90 % der theoretischen Dichte $\delta_{th}$ liegt die Porosität $\phi$ der Neutralzone der Bearbeitungssegmente unter 10 Volumen-%. Je geringer die Porosität der Neutralzone der Bearbeitungssegmente ist, umso höher sind die Ausbruchfestigkeit der Bearbeitungssegmente und damit die Robustheit der Bearbeitungswerkzeuge.

Besonders bevorzugt wird als zweiter metallischer Pulverwerkstoff ein metallischer Pulverwerkstoff eingesetzt, der bei einem Maximaldruck von 1.250 MPa auf eine mittlere Dichte $\delta$ grösser als 93 % der theoretischen Dichte $\delta_{th}$ komprimierbar ist. Bei mittleren Dichten $\delta$ grösser als 93 % der theoretischen Dichte $\delta_{th}$ liegt die Porosität $\phi$ der Bearbeitungssegmente unter 7 Volumen-%. Je geringer die Porosität der Neutralzone der Bearbeitungssegmente ist, umso höher sind die Ausbruchfestigkeit der Bearbeitungssegmente und damit die Robustheit der Bearbeitungswerkzeuge.

**Ausführungsbeispiele**

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:

FIGN. 1A, B     eine als Bohrkrone ausgebildete erste Ausführungsform eines abrasiven Bearbeitungswerkzeuges (FIG. 1A) und eine als Sägeblatt ausgebildete zweite Ausführungsform eines abrasiven Bearbeitungswerkzeuges (FIG. 1 B);

FIGN. 2A-C     ein Bearbeitungssegment der Bohrkrone der FIG. 1A in einer Ansicht auf eine Außenseite des Bearbeitungssegmentes (FIG. 2A), in einer Ansicht auf eine Innenseite des Bearbeitungssegmentes (FIG. 2B) und in einem Schnitt entlang der Schnittlinie A-A in FIG. 2B (FIG. 2C);

FIGN. 3A-C     ein Bearbeitungssegment des Sägeblattes der FIG. 1B in einer dreidimensionalen Ansicht des Bearbeitungssegmentes (FIG. 3A), in einer Ansicht auf eine erste Seite des Bearbeitungssegmentes (FIG. 3B) und in einer Ansicht auf eine zweite Seite des Bearbeitungssegmentes (FIG. 3C);

FIGN. 4A-C     ein Bearbeitungssegment als Grünling (FIG. 4A), als Pressling (FIG. 4B) und als fertiges Bearbeitungssegment (FIG. 4C); und

FIG. 5     die Werkstoffschichten und Partikellagen, aus denen der Grünling der FIG. 4A schichtweise hergestellt wird.

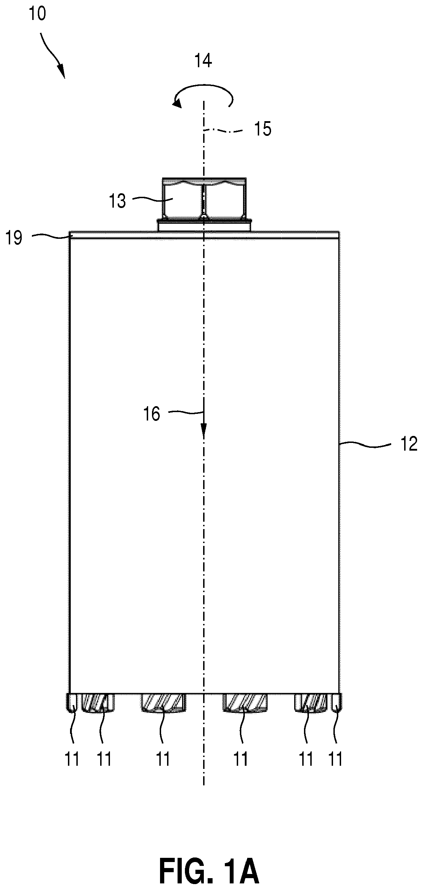

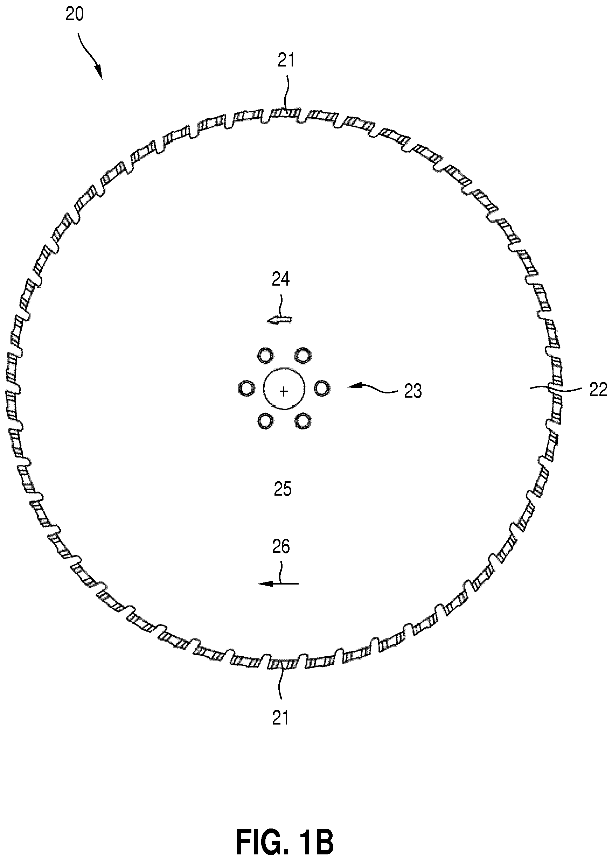

**FIGN. 1A, B** zeigen eine erste und zweite Ausführungsform eines abrasiven Bearbeitungswerkzeuges. Dabei zeigt FIG. 1A die als Bohrkrone **10** ausgebildete erste Ausführungsform eines abrasiven Bearbeitungswerkzeuges und FIG. 1B die als Sägeblatt **20** ausgebildete zweite Ausführungsform eines abrasiven Bearbeitungswerkzeuges.

Die Bohrkrone 10 umfasst mehrere Bearbeitungssegmente **11**, einen rohrförmigen Grundkörper **12** und eine Werkzeugaufnahme **13**. Die Bearbeitungssegmente 11 für die Bohrkrone 10 werden auch als Bohrsegmente 11 bezeichnet und der rohrförmige Grundkörper 12 wird auch als Bohrschaft bezeichnet. Die Bohrkrone 10 wird über die Werkzeugaufnahme 13 mit einem Kernbohrgerät verbunden und im Bohrbetrieb vom Kernbohrgerät in einer Drehrichtung **14** um eine Drehachse **15** angetrieben. Während der Drehung der Bohrkrone 10 um die Drehachse 15 wird die Bohrkrone 10 entlang einer Vorschubrichtung **16** in ein zu bearbeitendes Werkstück bewegt, wobei die Vorschubrichtung 16 parallel zur Drehachse 15 verläuft. Die Bohrkrone 10 erzeugt im zu bearbeitenden Werkstück einen Bohrkern und ein Bohrloch.

Der Bohrschaft 12 ist im Ausführungsbeispiel der FIG. 1A einteilig ausgebildet und die Bohrsegmente 11 sind fest mit dem Bohrschaft 12 verbunden. Alternativ kann der Bohrschaft zweiteilig aus einem ersten Bohrschaftabschnitt und einem zweiten Bohrschaftabschnitt ausgebildet sein, wobei die Bohrsegmente 11 fest mit dem ersten Bohrschaftabschnitt und die Werkzeugaufnahme 13 fest mit dem zweiten Bohrschaftabschnitt verbunden ist. Der erste und zweite Bohrschaftabschnitt werden über eine lösbare Verbindungseinrichtung miteinander verbunden. Die lösbare Verbindungseinrichtung ist beispielsweise als Steck-Dreh-Verbindung, wie in EP 2 745 965 A1 oder EP 2 745 966 A1 beschrieben, ausgebildet. Die Ausbildung des Bohrschaftes als einteiliger oder zweiteiliger Bohrschaft hat keinen Einfluss auf den Aufbau bzw. die Zusammensetzung der Bohrsegmente 11.

Die Bohrsegmente 11 sind fest mit dem Bohrschaft 12 verbunden, beispielsweise durch Schrauben, Kleben, Löten oder Schweißen. Um die Bohrsegmente 11 mit dem Bohrschaft 12 verschweißen zu können, müssen die Bohrsegmente 11 zumindest im Kontaktbereich zum Bohrschaft 12 aus einem gut schweißbaren Werkstoff hergestellt sein. Da viele metallische Pulverwerkstoffe, die zur Herstellung von Bearbeitungssegmenten verwendet werden, schlecht schweißbare Werkstoffe sind, hat sich ein zweiteiliger Aufbau der Bearbeitungssegmente aus einer Bearbeitungszone und einer Neutralzone etabliert. Für die Neutralzone wird ein metallischer Pulverwerkstoff mit guten Schweißeigenschaften verwendet.

Das Sägeblatt 20 umfasst mehrere Bearbeitungssegmente **21,** einen scheibenförmigen Grundkörper **22** und eine Werkzeugaufnahme **23**. Die Bearbeitungssegmente 21 für das Sägeblatt 20 werden auch als Sägesegmente bezeichnet und der scheibenförmige Grundkörper 22 wird auch als Stammblatt bezeichnet. Das Sägeblatt 20 wird über die Werkzeugaufnahme 23 mit einer Säge verbunden und im Sägebetrieb von der Säge in einer Drehrichtung **24** um eine Drehachse **25** angetrieben. Während der Drehung des Sägeblattes 20 um die Drehachse 25 wird das Sägeblatt 20 entlang einer Vorschubrichtung **26** bewegt, wobei die Vorschubrichtung 26 parallel zur Längsebene verläuft. Das Sägeblatt 20 erzeugt im zu bearbeitenden Werkstück einen Sägeschlitz.

Die Sägesegmente 21 sind fest mit dem Stammblatt 22 verbunden, beispielsweise durch Schrauben, Kleben, Löten oder Schweißen. Um die Sägesegmente 21 mit dem Stammblatt 22 verschweißen zu können, müssen die Sägesegmente 21 zumindest im Kontaktbereich zum Stammblatt 22 aus einem gut schweißbaren Werkstoff hergestellt sein. Da viele metallische Pulverwerkstoffe, die zur Herstellung von Bearbeitungssegmenten verwendet werden, schlecht schweißbare Werkstoffe sind, hat sich ein zweiteiliger Aufbau der Bearbeitungssegmente aus einer Bearbeitungszone und einer Neutralzone etabliert. Für die Neutralzone wird ein metallischer Pulverwerkstoff mit guten Schweißeigenschaften verwendet.

Die Bohrsegmente 11 der Bohrkrone 10 und die Sägesegmente 21 des Sägeblattes 20 werden mittels des erfindungsgemäßen Verfahrens zur Herstellung eines Bearbeitungssegmentes hergestellt. Unter dem Begriff "Bearbeitungssegmente" werden sämtliche Bearbeitungssegmente für abrasive Bearbeitungswerkzeuge zusammengefasst. Beispiele für abrasive Bearbeitungswerkzeuge sind Bohrkronen, Sägeblätter und Schleifscheiben. Abhängig vom abrasiven Bearbeitungswerkzeug werden Bearbeitungssegmente für Bohrkronen als Bohrsegmente, Bearbeitungssegmente für Sägeblätter als Sägesegmente und Bearbeitungssegmente für Schleifscheiben als Schleifsegmente bezeichnet. Sämtliche Bearbeitungssegmente für abrasive Bearbeitungswerkzeuge können mittels des erfindungsgemäßen Verfahrens hergestellt werden; der Ablauf der Verfahrensschritte ist für alle Bearbeitungssegmente identisch. Die Festigkeit und Verschleißrate der Bearbeitungssegmente wird über die Auswahl des metallischen Pulverwerkstoffes eingestellt und in erster Linie an den zu bearbeitenden Untergrund und die eingesetzten Hartstoffpartikel angepasst.

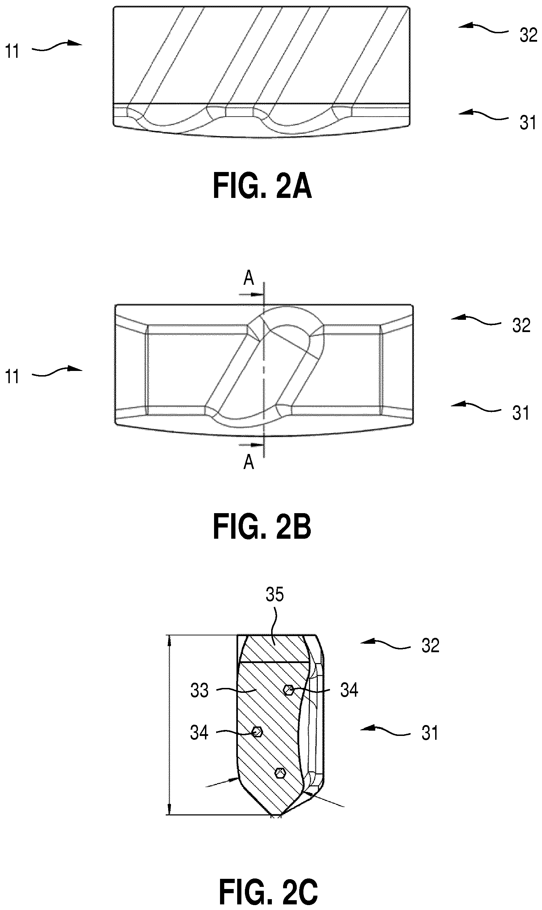

**FIGN. 2A-C** zeigen das Bohrsegment 11 der Bohrkrone 10 der FIG. 1A in einer Ansicht auf eine Außenseite des Bohrsegmentes 11 (FIG. 2A), in einer Ansicht auf eine Innenseite des Bohrsegmentes 11 (FIG. 2B) und in einem Schnitt entlang der Schnittlinie A-A in FIG. 2B (FIG. 2C). Bei der Bearbeitung eines Werkstückes mit der Bohrkrone 10 weist die Außenseite des Bohrsegmentes 11 zum Bohrloch und die Innenseite des Bohrsegmentes 11 zum Bohrkern. Das Bohrsegment 11 der Bohrkrone 10 bildet eine erste Ausführungsform eines Bearbeitungssegmentes, das mittels des erfindungsgemäßen Verfahrens zur Herstellung eines Bearbeitungssegmentes hergestellt wird.

Da das Bohrsegment 11 mit dem Bohrschaft 12 verschweißt wird, ist das Bohrsegment 11 aus einer Bearbeitungszone **31** und einer Neutralzone **32** aufgebaut, die durch Sintern stoffschlüssig verbunden werden. Bei Bohrsegmenten, die beispielsweise durch Löten mit dem Bohrschaft 12 verbunden werden, kann die Neutralzone 32 entfallen. Die Bearbeitungszone 31 ist aus einem ersten metallischen Pulverwerkstoff **33** und Hartstoffpartikeln **34** hergestellt und die Neutralzone 32 ist aus einem zweiten metallischen Pulverwerkstoff **35** hergestellt, wobei die Neutralzone 32 frei von Hartstoffpartikeln 35 ist.

Der erste metallische Pulverwerkstoff 33 wird insbesondere im Hinblick auf die Eigenschaften des Bohrsegmentes 11, wie Festigkeit, Verschleißwiderstand und Haltevermögen der Hartstoffpartikel, ausgewählt und der zweite metallische Pulverwerkstoff 35 wird insbesondere im Hinblick auf gute Schweißbarkeit mit dem Bohrschaft 12 ausgewählt. Da keine metallischen Pulverwerkstoffe bekannt sind, die die gewünschten Eigenschaften des Bohrsegmentes 11 erzielen und gleichzeitig gut schweißbar sind, unterscheiden sich der erste metallische Pulverwerkstoff 33 und der zweite metallische Pulverwerkstoff 35 in der Zusammensetzung voneinander.

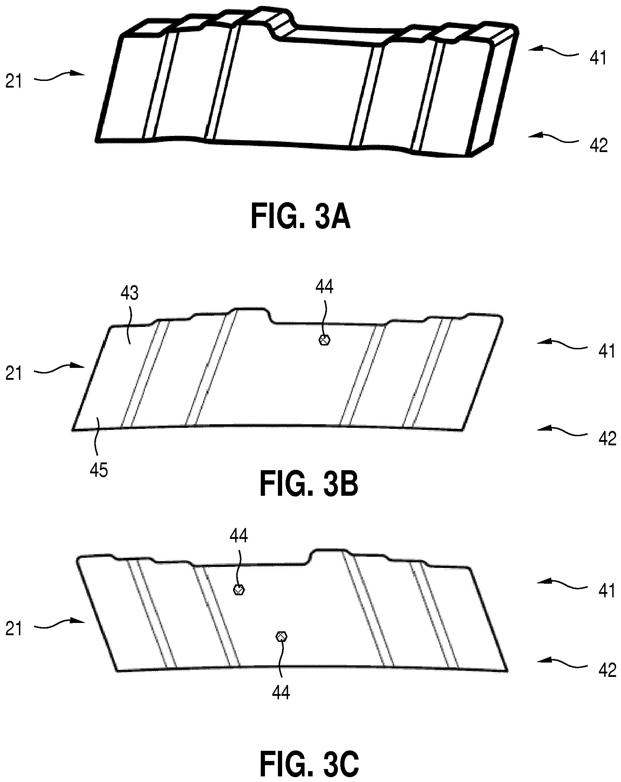

**FIGN. 3A-C** zeigen das Sägesegment 21 des Sägeblattes 20 der FIG. 1B in einer dreidimensionalen Ansicht des Sägesegmentes 21 (FIG. 3A), in einer Ansicht auf eine erste Seite des Sägesegmentes 21 (FIG. 3B) und in einer Ansicht auf eine zweite Seite des Sägesegmentes 21 (FIG. 3C). Das Sägesegment 21 des Sägeblattes 20 bildet eine zweite Ausführungsform eines Bearbeitungssegmentes, das mittels des erfindungsgemäßen Verfahrens zur Herstellung eines Bearbeitungssegmentes hergestellt wird.

Da das Sägesegment 21 mit dem Grundkörper 22 verschweißt wird, ist das Sägesegment 21 aus einer Bearbeitungszone **41** und einer Neutralzone **42** aufgebaut, die durch Sintern stoffschlüssig verbunden werden. Bei Sägesegmenten, die beispielsweise durch Löten mit dem Grundkörper 22 verbunden werden, kann die Neutralzone 42 entfallen. Die Bearbeitungszone 41 ist aus einem ersten metallischen Pulverwerkstoff **43** und Hartstoffpartikeln **44** hergestellt und die Neutralzone 42 ist aus einem zweiten metallischen Pulverwerkstoff **45** hergestellt, wobei die Neutralzone 42 frei von Hartstoffpartikeln 44 ist.

Der erste metallische Pulverwerkstoff 43 wird insbesondere im Hinblick auf die Eigenschaften des Sägesegmentes 21, wie Festigkeit, Verschleißwiderstand und Haltevermögen der Hartstoffpartikel, ausgewählt und der zweite metallische Pulverwerkstoff 45 wird insbesondere im Hinblick auf gute Schweißbarkeit mit dem Grundkörper 22 ausgewählt. Da keine metallischen Pulverwerkstoffe bekannt sind, die die gewünschten Eigenschaften des Sägesegmentes 21 erzielen und gleichzeitig gut schweißbar sind, unterscheiden sich der erste metallische Pulverwerkstoff 43 und der zweite metallische Pulverwerkstoff 45 in der Zusammensetzung voneinander.

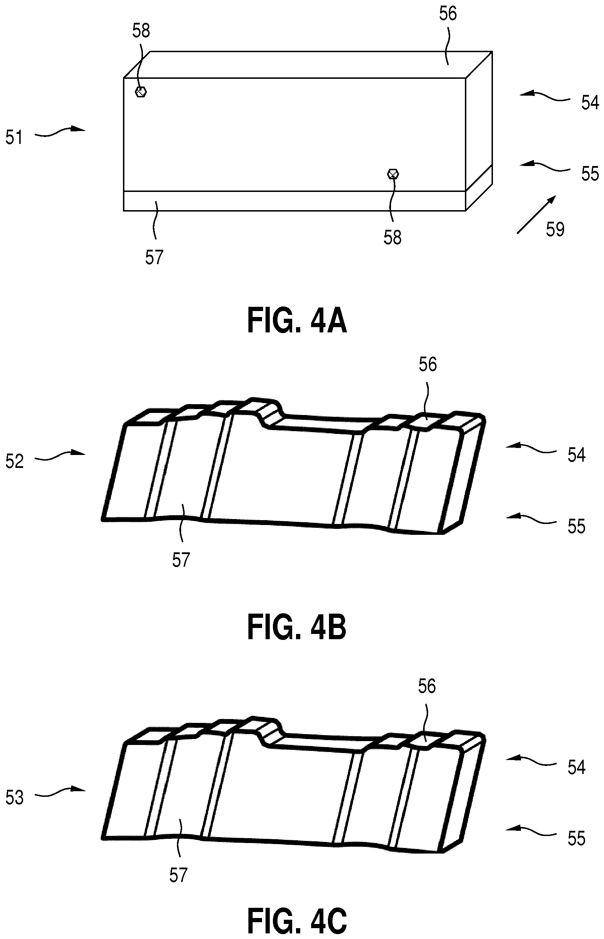

**FIGN. 4A-C** zeigen ein Bearbeitungssegment, das mittels des erfindungsgemäßen Verfahrens zur Herstellung eines Bearbeitungssegmentes hergestellt wird. Das Bearbeitungssegment wird in einem dreiteiligen Verfahren hergestellt. Dabei zeigt FIG. 4A einen Grünling **51** nach einem ersten Teil des dreiteiligen Verfahrens, FIG. 4B einen Pressling **52** nach einem zweiten Teil des dreiteiligen Verfahrens und FIG. 4C ein fertiges Bearbeitungssegment **53** nach einem dritten Teil des dreiteiligen Verfahrens. Das Bearbeitungssegment 53 kann das Bohrsegment 11 für die Bohrkrone 10 der FIG. 1A, das Sägesegment 21 für das Sägeblatt 20 der FIG. 1B oder ein beliebiges Bearbeitungssegment für ein abrasives Bearbeitungswerkzeug bilden.

Das Bearbeitungssegment 53 wird mit einem rohrförmigen oder scheibenförmigen Grundkörper verbunden. Um das Bearbeitungssegment 53 mit dem Grundkörper verschweißen zu können, muss das Bearbeitungssegment 53 zumindest im Kontaktbereich zum Grundkörper aus einem gut schweißbaren Werkstoff hergestellt sein. Da viele metallische Pulverwerkstoffe, die zur Herstellung von Bearbeitungssegmenten verwendet werden, schlecht schweißbare Werkstoffe sind, erfolgt ein zweiteiliger Aufbau des Bearbeitungssegmentes 53 aus einer Bearbeitungszone **54** und einer Neutralzone **55,** wobei die Bearbeitungszone 54 und Neutralzone 55 durch Sintern stoffschlüssig verbunden werden.

Im ersten Teil des dreiteiligen Verfahrens werden die Bearbeitungszone 54 und die Neutralzone 55 des Grünlings 51 schichtweise aus Werkstoffschichten eines ersten und zweiten metallischen Pulverwerkstoffes **56, 57** und Partikellagen von Hartstoffpartikeln **58** aufgebaut, wobei die Werkstoffschichten und Partikellagen in einer Aufbaurichtung **59** gestapelt werden. Im zweiten Teil des dreiteiligen Verfahrens wird der schichtweise aufgebaute Grünling 51 unter Druckeinwirkung mit einem Pressdruck zum Pressling 52 verdichtet und in die Endgeometrie des Bearbeitungssegmentes 53 umgeformt. Im dritten Teil des dreiteiligen Verfahrens wird der Pressling 52 unter Temperatureinwirkung bei einer Sintertemperatur $T_{sinter}$ zum fertigen Bearbeitungssegment 53 gesintert. Das Bearbeitungssegment 53 wird mit einem Pressdruck von 1.200 MPa in die Endgeometrie umgeformt und bei einer Sintertemperatur $T_{sinter}$ von 975 °C für 30 Minuten gesintert.

Der erste metallische Pulverwerkstoff 56 besteht beispielsweise aus 91,5 Masse-% Eisenpulver, 5 Masse-% Bronze (Kupfer-Zinn), 3 Masse-% Bismut-Sulfid und 0,5 Masse-% Kohlenstoff, zusätzlich wird ein Presshilfsmittel eingesetzt. Der zweite metallische Pulverwerkstoff 57 besteht beispielsweise aus 99,8 Masse-% Eisenpulver und 0,2 Masse-% Kohlenstoff, zusätzlich wird ein Presshilfsmittel eingesetzt. Als Eisenpulver für den ersten und zweiten metallischen Pulverwerkstoff 56, 57 eignet sich beispielsweise Astaloy Mo der Firma Höganäs, ein vorlegiertes Eisenpulver mit 1,5 Masse-% Molybdän. Der erste metallische Pulverwerkstoff 56 und der zweite metallische Pulverwerkstoff 57 haben den Vorteil, dass sie mindestens 80 Masse-% eines Eisenpulvers enthalten, das kostengünstig verfügbar ist und die kostengünstige Herstellung von Bearbeitungssegmenten im Rahmen des erfindungsgemäßen Verfahrens ermöglichen.

Die Eigenschaften des ersten metallischen Pulverwerkstoffes 56 sind so gewählt, dass der Grünling 51 bei einem Druck zwischen 850 MPa und 1.250 MPa auf eine mittlere Dichte $\delta$ von mindestens 90 % der theoretischen Dichte $\delta_{th}$ des ersten metallischen Pulverwerkstoffes 56 komprimierbar ist. Bei einer mittleren Dichte $\delta$ von mindestens 90 % der theoretischen Dichte $\delta_{th}$ liegt die Porosität des Bearbeitungssegmentes 53 unter 10 Volumen-%. Als erster metallischer Pulverwerkstoff 56 wird ein metallischer Pulverwerkstoff eingesetzt, der frei fließend ist, der eine maximale Korngröße von 200 $\mu m$ aufweist und der bei einem Maximaldruck von 1.250 MPa auf eine mittlere Dichte $\delta$ grösser als 90 % der theoretischen Dichte $\delta_{th}$ komprimierbar ist. Ein erster metallischer Pulverwerkstoff 56 mit den genannten Eigenschaften (Fließfähigkeit, maximale Korngröße und Verpressbarkeit) ermöglicht die Herstellung von Bearbeitungssegmenten, die die Anforderungen hinsichtlich der Festigkeit des fertigen Bearbeitungssegmentes 53 und der Verschleißrate des gesinterten ersten metallischen Pulverwerkstoffes 56 erfüllen. Der schichtweise Aufbau des Grünlings 51 aus Werkstoffschichten erfordert einen zumindest leicht fließenden ersten metallischen Pulverwerkstoff 56. Die Verwendung von Pulverkörnern mit einer maximalen Korngröße von 200 $\mu m$ gewährleistet, dass die Hartstoffpartikel hinreichend genau in die zuvor aufgetragene Werkstoffschicht platziert werden können. Ein erster metallischer Pulverwerkstoff, der mit einem Maximaldruck von 1.250 MPa auf eine mittlere Dichte $\delta$ von mindestens 90 % der theoretischen Dichte $\delta_{th}$ komprimierbar ist, eignet sich die Herstellung von Bearbeitungssegmenten mit einer Porosität kleiner als 10 Volumen-%.

Die Eigenschaften des zweiten metallischen Pulverwerkstoffes 57 sind im Hinblick auf die Schweißbarkeit ausgewählt. Dabei wird als zweiter metallischer Pulverwerkstoff 57 ein metallischer Pulverwerkstoff eingesetzt, der zumindest leicht fließend ist und der bei einem Maximaldruck von 1.250 MPa auf eine mittlere Dichte $\delta$ grösser als 90 % der theoretischen Dichte $\delta_{th}$ komprimierbar ist. Besonders bevorzugt wird als zweiter metallischer Pulverwerkstoff 57 ein metallischer Pulverwerkstoff eingesetzt, der frei fließend ist. Ein zumindest leicht fließender zweiter metallischer Pulverwerkstoff 57 eignet sich für den schichtweisen Aufbau der Neutralzone 55 im Rahmen des erfindungsgemäßen Verfahrens. Je höher die Fließfähigkeit des zweiten metallischen Pulverwerkstoffes 57 ist, umso besser ist der zweite metallische Pulverwerkstoff 57 für den schichtweisen Aufbau der Neutralzone 55 geeignet. Bei mittleren Dichten $\delta$ grösser als 90 % der theoretischen Dichte $\delta_{th}$ liegt die Porosität $\phi$ der Neutralzone 55 der Bearbeitungssegmente 53 unter 10 Volumen-%.

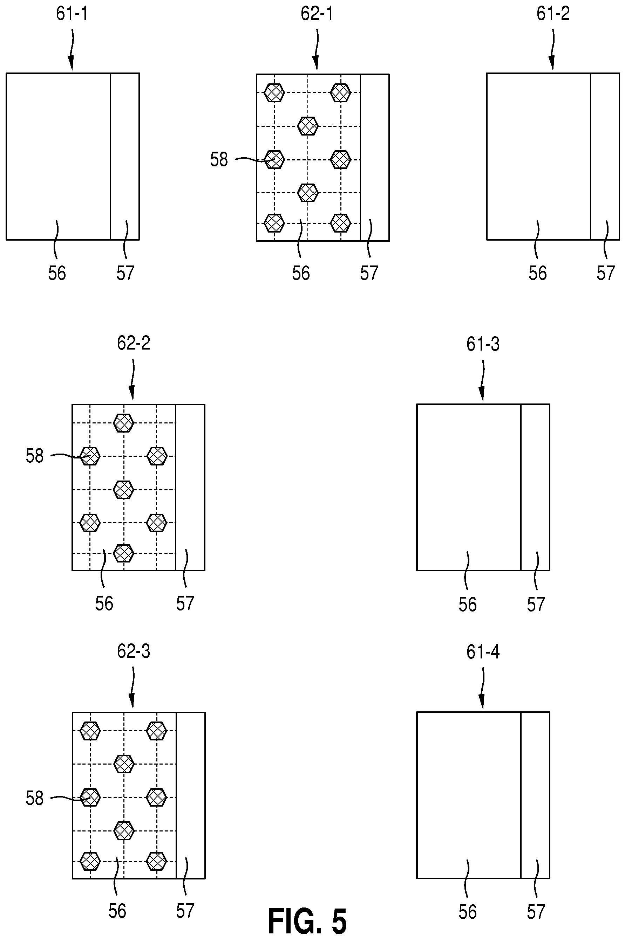

**FIG. 5** zeigt die Werkstoffschichten des ersten und zweiten metallischen Pulverwerkstoffes 56, 57 und die Partikellagen der Hartstoffpartikel 58, aus denen der Grünling 51 schichtweise hergestellt wird. Der Grünling 51 ist in Aufbaurichtung 59 aus N = 4 Werkstoffschichten des ersten und zweiten metallischen Pulverwerkstoffes 56, 57 und M = 3 Partikellagen der Hartstoffpartikel 58 aufgebaut.

Eine erste Werkstoffschicht **61-1,** die in Aufbaurichtung 59 eine erste Schichtdicke **d1** aufweist, bildet die Unterseite des Grünlings 51 und wird auch als untere Decklage bezeichnet. Auf die erste Werkstoffschicht 61-1 des ersten und zweiten metallischen Pulverwerkstoffes 56, 57 wird eine erste Partikellage **62-1** der Hartstoffpartikel 58 angeordnet. Eine zweite Werkstoffschicht **61-2,** die in Aufbaurichtung 59 eine zweite Schichtdicke **$d_2$** aufweist, wird auf die erste Partikellage 62-1 aufgetragen. Auf die zweite Werkstoffschicht 61-2 des ersten und zweiten metallischen Pulverwerkstoffes 56, 57 wird eine zweite Partikellage **62-2** der Hartstoffpartikel 58 angeordnet. Eine dritte Werkstoffschicht **61-3,** die in Aufbaurichtung 59 eine dritte Schichtdicke **$d_3$** aufweist, wird auf die zweite Partikellage 62-2 aufgetragen. Auf die dritte Werkstoffschicht 61-3 des ersten und zweiten metallischen Pulverwerkstoffes 56, 57 wird eine dritte Partikellage **62-3** der Hartstoffpartikel 58 angeordnet. Eine vierte Werkstoffschicht **61-4,** die in Aufbaurichtung 59 eine vierte Schichtdicke **$d_4$** aufweist, bildet die Oberseite des Grünlings 51 und wird auch als obere Decklage bezeichnet.

Die Hartstoffpartikel 58 der ersten, zweiten und dritten Partikellage 62-1, 62-2, 62-3 sind im Inneren des Grünlings 51 angeordnet und die Oberfläche des Grünlings 51 weist keine vorstehenden Hartstoffpartikel 58 auf. Beim Verdichten des Grünlings 51 unter Druckeinwirkung im zweiten Teil des dreiteiligen Verfahrens tritt kein Verschleiß der Werkzeugform durch vorstehende Hartstoffpartikel 58 auf, so dass ein Pressdruck grösser als 850 MPa eingesetzt werden kann, der den Grünling 51 in die Endgeometrie verdichtet. Ein hoher Pressdruck ermöglicht eine kostengünstige und werkzeugschonende Herstellung von Bearbeitungssegmenten mit einer mittleren Dichte über 90 % der theoretischen Dichte und einer Porosität unter 10 Volumen-%.

Die Hartstoffpartikel 58 der ersten Partikellage 62-1, der zweiten Partikellage 62-2 und der dritten Partikellage 62-3 sind in Setzmustern angeordnet. Im Ausführungsbeispiel stimmt das Setzmuster der ersten Partikellage 62-1 mit dem Setzmuster der dritten Partikellage 62-3 überein und das Setzmuster der zweiten Partikellage 62-2 ist gegenüber den Setzmustern der ersten und dritten Partikellage 62-1, 62-3 in einer Ebene senkrecht zur Aufbaurichtung 59 verschoben. Mit Hilfe von Längs- und Querlinien wird ein zweidimensionales Gitter erzeugt, an dessen Schnittpunkten die Hartstoffpartikel 58 angeordnet werden. Dabei erfolgt die Besetzung der Schnittpunkte nach einer vorgegebenen Regel, beispielsweise wird jeder zweite Schnittpunkt des Gitters mit einem Hartstoffpartikel 58 besetzt. Beim Gitter der FIG. 5 verlaufen die Längs- und Querlinien geradlinig und sind rechtwinklig zueinander angeordnet. Alternativ können beispielsweise Kreissegmente als Längslinien verwendet werden, die parallel oder konzentrisch zueinander angeordnet sind, und/oder die Querlinien können unter einem Winkel zu den Längslinien geneigt sein.

**Patentansprüche**

1. Verfahren zur Herstellung eines Bearbeitungssegmentes (11; 21; 53), bei dem:

   ■ ein Grünling (51) aus einer Bearbeitungszone (54) aufgebaut wird, wobei die Bearbeitungszone (54) aus einem ersten metallischen Pulverwerkstoff (56) und Hartstoffpartikeln (58) hergestellt wird,
   ■ der Grünling (51) unter Druckeinwirkung mit einem Pressdruck zu einem Pressling (52) verdichtet wird, wobei der Pressling (52) im Wesentlichen die Endgeometrie des Bearbeitungssegmentes (53) aufweist, und
   ■ der Pressling (52) unter Temperatureinwirkung bei einer Sintertemperatur ($T_{sinter}$) zum fertigen Bearbeitungssegment (53) gesintert wird,

   **dadurch gekennzeichnet, dass** die Bearbeitungszone (54) durch schichtweises Auftragen von Werkstoffschichten (61-1, 61-2, 61-3, 61-4) des ersten metallischen Pulverwerkstoffes (56) und Partikellagen (62-1, 62-2, 62-3) der Hartstoffpartikel (58) hergestellt wird, wobei die Hartstoffpartikel (58) einer Partikellage (62-1, 62-2, 62-3) in die zuvor aufgetragene Werkstoffschicht (61-1, 61-2, 61-3) des ersten metallischen Pulverwerkstoffes (56) platziert werden.

2. Verfahren nach Anspruch 1, **dadurch gekennzeichnet, dass** die Bearbeitungszone (54) aus N Werkstoffschichten (61-1, 61-2, 61-3, 61-4) des ersten metallischen Pulverwerkstoffes (56) und M Partikellagen (62-1, 62-2, 62-3) der Hartstoffpartikel (58) hergestellt wird, wobei die Anzahl N der Werkstoffschichten grösser oder gleich der Anzahl M der Partikellagen ist.

3. Verfahren nach Anspruch 2, **dadurch gekennzeichnet, dass** die Hartstoffpartikel (58) einer Partikellage (62-1, 62-2, 62-3) mit einem Seitenabstand grösser als 50 $\mu$m in die zuvor aufgetragene Werkstoffschicht (61-1, 61-2, 61-3) des ersten metallischen Pulverwerkstoffes (54) platziert werden.

4. Verfahren nach einem der Ansprüche 2 bis 3, **dadurch gekennzeichnet, dass** nach dem Platzieren der M-ten Partikellage (62-3) der Hartstoffpartikel (58) eine weitere Werkstoffschicht (61-4) des ersten metallischen Pulverwerkstoffes (56) als obere Decklage aufgetragen wird.

5. Verfahren nach Anspruch 1, **dadurch gekennzeichnet, dass** der Grünling (51) unter Druckeinwirkung mit einem Pressdruck zwischen 850 MPa und 1.250 MPa zum Pressling (52) verdichtet wird.

6. Verfahren nach Anspruch 1, **dadurch gekennzeichnet, dass** der Pressling (52) unter Temperatureinwirkung bei einer Sintertemperatur ($T_{sinter}$) zwischen 900 °C und 1.050 °C zum fertigen Bearbeitungssegment (53) gesintert wird.

7. Verfahren nach einem der Ansprüche 1 bis 6, **dadurch gekennzeichnet, dass** als erster metallischer Pulverwerkstoff (56) ein metallischer Pulverwerkstoff eingesetzt wird, der zumindest leicht fließend ist.

8. Verfahren nach Anspruch 7, **dadurch gekennzeichnet, dass** als erster metallischer Pulverwerkstoff (56) ein metallischer Pulverwerkstoff eingesetzt wird, der frei fließend ist.

9. Verfahren nach einem der Ansprüche 7 bis 8, **dadurch gekennzeichnet, dass** als erster metallischer Pulverwerkstoff (56) ein metallischer Pulverwerkstoff eingesetzt wird, der eine maximale Korngröße von 200 $\mu$m aufweist.

10. Verfahren nach einem der Ansprüche 7 bis 9, **dadurch gekennzeichnet, dass** als erster metallischer Pulverwerkstoff (56) ein metallischer Pulverwerkstoff eingesetzt wird, der bei einem Maximaldruck von 1.250 MPa auf eine mittlere Dichte (8) grösser als 90 % der theoretischen Dichte ($\delta_{th}$) komprimierbar ist.

11. Verfahren nach Anspruch 10, **dadurch gekennzeichnet, dass** als erster metallischer Pulverwerkstoff (56) ein metallischer Pulverwerkstoff eingesetzt wird, der bei einem Maximaldruck von 1.250 MPa auf eine mittlere Dichte (8) grösser als 93 % der theoretischen Dichte ($\delta_{th}$) komprimierbar ist.

12. Verfahren nach einem der Ansprüche 1 bis 6, **dadurch gekennzeichnet, dass** als erster metallischer Pulverwerkstoff (56) ein metallischer Pulverwerkstoff eingesetzt wird, der frei fließend ist, der eine maximale Korngröße von 200 $\mu$m aufweist und der bei einem Maximaldruck von 1.250 MPa auf eine mittlere Dichte ($\delta$) grösser als 90 % der theoretischen Dichte ($\delta_{th}$) komprimierbar ist.

13. Verfahren nach einem der Ansprüche 7 bis 12, **dadurch gekennzeichnet, dass** als erster metallischer Pulverwerkstoff (56) ein metallischer Pulverwerkstoff eingesetzt wird, der mindestens 80 Masse-% eines elementaren oder niedriglegierten Eisenpulvers enthält.

**14.** Verfahren nach Anspruch 13, **dadurch gekennzeichnet, dass** als erster metallischer Pulverwerkstoff (56) ein metallischer Pulverwerkstoff eingesetzt wird, der maximal 10 Masse-% eines Metallsulfids enthält.

**15.** Verfahren nach Anspruch 14, **dadurch gekennzeichnet, dass** ein Metallsulfid eingesetzt wird, dessen Schmelztemperatur unterhalb der Sintertemperatur ($T_{sinter}$) liegt.

**16.** Verfahren nach einem der Ansprüche 1 bis 15, **dadurch gekennzeichnet, dass** der Grünling (51) aus der Bearbeitungszone (54) und einer Neutralzone (55) aufgebaut wird, wobei die Neutralzone (55) aus einem zweiten metallischen Pulverwerkstoff (57) hergestellt wird und der zweite metallische Pulverwerkstoff (57) vom ersten metallischen Pulverwerkstoff (56) verschieden ist.

**17.** Verfahren nach Anspruch 16, **dadurch gekennzeichnet, dass** als zweiter metallischer Pulverwerkstoff (57) ein metallischer Pulverwerkstoff eingesetzt wird, der zumindest leicht fließend ist.

**18.** Verfahren nach Anspruch 17, **dadurch gekennzeichnet, dass** als zweiter metallischer Pulverwerkstoff (57) ein metallischer Pulverwerkstoff eingesetzt wird, der frei fließend ist.

**19.** Verfahren nach einem der Ansprüche 16 bis 18, **dadurch gekennzeichnet, dass** als zweiter metallischer Pulverwerkstoff (57) ein metallischer Pulverwerkstoff eingesetzt wird, der bei einem Maximaldruck von 1.250 MPa auf eine mittlere Dichte ($\delta$) grösser als 90 % der theoretischen Dichte ($\delta_{th}$) komprimierbar ist.

**20.** Verfahren nach Anspruch 19, **dadurch gekennzeichnet, dass** als zweiter metallischer Pulverwerkstoff (57) ein metallischer Pulverwerkstoff eingesetzt wird, der bei einem Maximaldruck von 1.250 MPa auf eine mittlere Dichte ($\delta$) grösser als 93 % der theoretischen Dichte ($\delta_{th}$) komprimierbar ist.

**FIG. 1A**

**FIG. 1B**

FIG. 2A

FIG. 2B

FIG. 2C

21

41

42

## FIG. 3A

43    44

21

41

42

45

## FIG. 3B

44

21

41

42

44

## FIG. 3C

**FIG. 4A**

**FIG. 4B**

**FIG. 4C**

61-1

62-1

61-2

58

56 57

56 57

56 57

62-2

61-3

58

56 57

56 57

62-3

61-4

58

56 57

56 57

# FIG. 5

Europäisches
Patentamt

European
Patent Office

Office européen
des brevets

**EUROPÄISCHER RECHERCHENBERICHT**

Nummer der Anmeldung

EP 17 18 4200

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2005/210755 A1 (CHO HYUN S [US] ET AL) 29. September 2005 (2005-09-29) | 1-5,7,8, 10-12, 16-20 | INV. B22F3/105 B22F7/06 B22F3/00 |
| A | * Abbildungen 7a,7b * <br> * Absatz [0056] - Absatz [0057] * <br> * Absatz [0061] * <br> * Absatz [0077] - Absatz [0084] * <br> * Absatz [0088] * <br> ----- | 6,9, 13-15 | ADD. B22F5/00 |
| X | US 2002/077054 A1 (SUNG CHIEN-MIN [TW]) 20. Juni 2002 (2002-06-20) | 1,6-9, 13-15 | |
| A | * Abbildungen 1A-4 * <br> * Absatz [0044] - Absatz [0048] * <br> * Absatz [0051] - Absatz [0053] * <br> * Absätze [0055], [0058] * <br> * Absatz [0085] - Absatz [0086] * <br> * Absatz [0094] * <br> * Beispiel 2 * <br> * Anspruch 1 * <br> ----- | 2-5, 10-12, 16-20 | |
| X | EP 3 037 230 A1 (HILTI AG [LI]) 29. Juni 2016 (2016-06-29) | 1,4,13, 16 | RECHERCHIERTE SACHGEBIETE (IPC) |
| A | * Abbildungen 2A-2C * <br> * Absatz [0029] - Absatz [0033] * <br> ----- | 2,3, 5-12,14, 15,17-20 | B22F B29C B28D |
| X | WO 2017/114675 A1 (ELEMENT SIX LTD [GB]) 6. Juli 2017 (2017-07-06) | 1,7-9,13 | |
| A | * Abbildung 2a * <br> * Beispiel 1 * <br> * Seite 7, Absatz 6 * <br> ----- | 2-6, 10-12, 14-20 | |
| A | US 2010/043304 A1 (LEE HYUN WOO [KR] ET AL) 25. Februar 2010 (2010-02-25) * Abbildungen 2,3,6 * * Absatz [0043] - Absatz [0052] * ----- | 1-20 | |

-/--

Der vorliegende Recherchenbericht wurde für alle Patentansprüche erstellt

| Recherchenort | Abschlußdatum der Recherche | Prüfer |
|---|---|---|
| Den Haag | 8. Februar 2018 | Fodor, Anna |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

    .......................................................................
& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 17 18 4200

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 231 288 A1 (SUMITOMO ELECTRIC INDUSTRIES [JP]) 14. August 2002 (2002-08-14) * das ganze Dokument * ----- | 1-20 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 8. Februar 2018 | Fodor, Anna |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

Seite 2 von 2

**ANHANG ZUM EUROPÄISCHEN RECHERCHENBERICHT
ÜBER DIE EUROPÄISCHE PATENTANMELDUNG NR.**

EP 17 18 4200

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-02-2018

| Im Recherchenbericht angeführtes Patentdokument | Datum der Veröffentlichung | Mitglied(er) der Patentfamilie | Datum der Veröffentlichung |
|---|---|---|---|
| US 2005210755 A1 | 29-09-2005 | EP 1877223 A2<br>US 2005210755 A1<br>WO 2006099194 A2 | 16-01-2008<br>29-09-2005<br>21-09-2006 |
| US 2002077054 A1 | 20-06-2002 | KEINE | |
| EP 3037230 A1 | 29-06-2016 | AU 2015371100 A1<br>CN 107107379 A<br>EP 3037230 A1<br>EP 3237165 A1<br>KR 20170095391 A<br>US 2017368714 A1<br>WO 2016102525 A1 | 13-07-2017<br>29-08-2017<br>29-06-2016<br>01-11-2017<br>22-08-2017<br>28-12-2017<br>30-06-2016 |
| WO 2017114675 A1 | 06-07-2017 | GB 2546615 A<br>WO 2017114675 A1 | 26-07-2017<br>06-07-2017 |
| US 2010043304 A1 | 25-02-2010 | KR 100839518 B1<br>US 2010043304 A1<br>WO 2008091039 A1 | 19-06-2008<br>25-02-2010<br>31-07-2008 |
| EP 1231288 A1 | 14-08-2002 | EP 1231288 A1<br>IL 148377 A<br>WO 0132947 A1 | 14-08-2002<br>11-02-2007<br>10-05-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0925378 B1
- EP 2745965 A1
- EP 2745966 A1